# EUROPEAN PATENT APPLICATION

(11) **EP 4 439 847 A1**
(43) Date of publication of application: **02.10.2024**
(21) Application number: 23220669.8
(22) Date of filing: 29.12.2023
(51) Int. Cl.: H01M 50/505, H01M 50/503, H01M 50/213, H01M 50/516

(54) **BUSBAR, BATTERY MODULE, AND BATTERY PACK**

(30) Priority: 28.03.2023 CN 202310314150; 28.03.2023 CN 202320636842 U
(71) Applicant: Eve Energy Co., Ltd., Huizhou, Guangdong 516006 (CN)
(72) Inventor: CHEN, Zhenjie, Huizhou, 516006 (CN)
(74) Representative: Nederlandsch Octrooibureau

(57) **Abstract**

A busbar (1), a battery module, and a battery pack are provided. The busbar (1) includes a first connecting portion (100) and a second connecting portion (200) connected the first connecting portion (100). The first connecting portion (100) is welded to a positive electrode or a negative electrode of a first battery cell (10). The second connecting portion (200) is configured to be welded to a negative electrode or a positive electrode of a second battery cell (20). The central axis of the first connecting portion (100), the central axis of the second connecting portion (200) and the central axis of the first battery cell (10) and the second battery cell (20) are coincided with each other.

## Description

### BACKGROUND OF DISCLOSURE

### 1. Field of the Disclosure

The present disclosure relates to the field of battery manufacture, and more particularly, to a busbar, a battery module, and a battery pack.

### 2. Description of the Related Art

Currently, there is no uniform standardization of busbars for cylindrical batteries, resulting in a wide variety of busbar designs. This leads to the need to verify the process parameters of different busbars separately to meet the reliability of the product when producing and assembling cylindrical batteries, which is time-consuming and reduces the production efficiency. In addition, when processing different types of busbars, different types of molds and fixtures are needed, which increases the manufacturing cost.

Therefore, there is an urgent need to design a busbar, battery module and battery pack to solve the above technical problems.

### SUMMARY

An object of the present disclosure is to propose a busbar, a battery module, and a battery pack, which can solve issues in the prior art, make the formation of the busbar standardized and normalized, improves the production efficiency, and saves costs.

In a first aspect of the present disclosure, a busbar is provided. The busbar includes a first connecting portion and a second connecting portion. The first connecting portion is welded to a positive electrode or a negative electrode of a first battery cell. The second connecting portion is connected to the first connecting portion and welded to a negative electrode or a positive electrode of a second battery cell, wherein a central axis of the first connecting portion, a central axis of the second connecting portion, and a central axis of the first battery cell and the second battery cell are coincided with each other.

### BRIEF DESCRIPTION OF DRAWINGS

In order to more clearly illustrate the embodiments of the present disclosure or related art, the following figures will be described in the embodiments are briefly introduced. It is obvious that the drawings are merely some embodiments of the present disclosure, a person having ordinary skill in this field can obtain other figures according to these figures without paying the premise.
FIG. 1 is a schematic structural diagram of a busbar of an embodiment of the present disclosure.
FIG. 2 is a schematic structural diagram of the busbar of FIG. 1, connected with two battery cells in series.
FIG. 3 is a schematic structural diagram of two busbars connected in series of an embodiment of the present disclosure.
FIG. 4 is a schematic structural diagram of battery cells connected in parallel by the two busbars of FIG. 3.
FIG. 5 is a schematic structural diagram of three busbars connected in series of an embodiment of the present disclosure.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

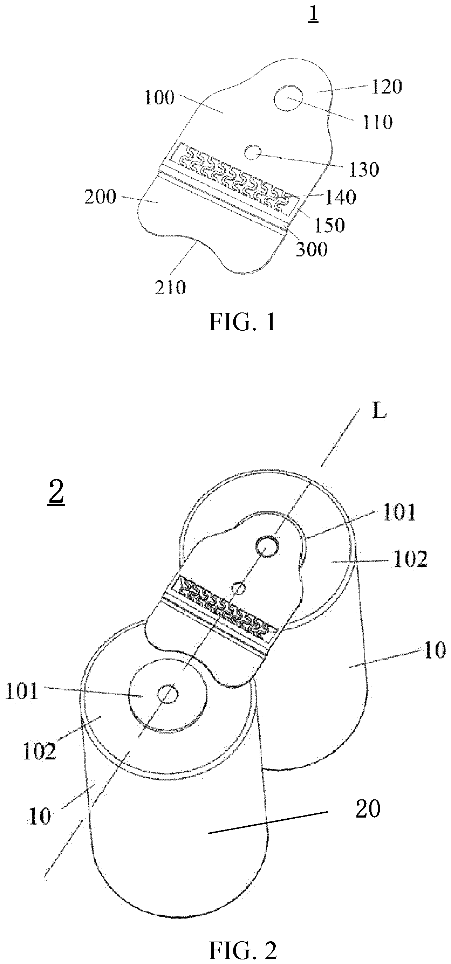

As shown in FIG. 1 and FIG. 2, a busbar 1 is provided in an embodiment of the present disclosure. The busbar 1 is welded to battery cells 10. The busbar 1 includes a first connecting portion 100 and a second connecting portion 200. The first connecting portion 100 is welded to a positive electrode 101 or a negative electrode 102 of a first battery cell 10. The second connecting portion 200 is connected to the first connecting portion 100, and the second connecting portion 200 is welded to a negative electrode 102 or a positive electrode 101 of a second battery cell 20. A central axis of the first connecting portion 100, a central axis of the second connecting portion 200, and a central axis of the first battery cell 10 and the second battery cell 20 connected by the busbar 1 are coincided with each other, so as to enable series connection of the first battery cell 10 and the second battery cell 20 by the busbar 1.

In some embodiments, the first connecting portion 100 and the second connecting portion 200 of the busbar 1 are of a one-piece structure. In other words, the first connecting portion 100 and the second connecting portion 200 of the busbar 1 are integrated as a single. The busbar 1 can be made of aluminum alloy, so as to improve reliability of the busbar 1 under premise of satisfying the conductivity.

The busbar 1 can be used to connect battery cells in series or in parallel. Exemplarily, the first connecting portion 100 can be welded with the positive electrode 101 of the first battery cell 10 by laser, and the second connecting portion 200 can be welded with the negative electrode 102 of the second battery cell 20 by laser, so as to realize series connection of the first battery cell 10 and the second battery cell 20.

In some embodiments, the first battery cell 10 and the second battery cell 20 can be cylindrical batteries.

In some embodiments, an outline dimension of the first connecting portion 100 and an outline dimension of the second connecting portion 200 are both constant, which facilitates mass production of the busbar 1, reduces use of different types of molds and inspection tools, and improve production efficiency. Coincidence of the central axis of the first connecting portion 100, the central axis of the second connecting portion 200, and the central axis of the first battery cell 10 and the second battery cell 20 connected by the busbar 1 makes formation of the busbar 1 standardized and normalized, reduces development costs of molds and inspection tools thereof, saves costs, and improves the production efficiency. It should be noted that the central axis of the first connecting portion 100 and the central axis of the second connecting portion 200 is an axis of symmetry of the busbar 1 in FIG. 1 (not shown), and the central axis of the first battery cell 10 and the second battery cell 20 connected by the busbar 1 is a central axis passing through positive electrodes of the first battery cell 10 and the second battery cell 20 as shown in FIG. 2, a coincided central axis is shown as central axis L in FIG. 2.

In this embodiment, because of the setting of the first connecting portion 100 and the second connecting portion 200, and the coincidence of the central axis of the first connecting portion 100, the central axis of the second connecting portion 200, and the central axis of the first battery cell 10 and the second battery cell 20 connected by the busbar 1, standardization and normalization of the busbar 1 are realized, so as to reduce the development costs of molds and inspection tools and save costs. At the same time, it is conducive to standardized control and management of process parameters of production line of the busbar 1, and to improve the production efficiency.

As shown in FIG. 1 and FIG. 2, in some embodiments, the first connecting portion 100 is provided with a positioning hole 110. The positioning hole 110 is located on the central axis of the first connecting portion 100 and is mounted on the positive electrode 101 of the first battery cell 10. Provision of the positioning hole 110 facilitates a laser welding device to target the busbar 1 and improve precision of welding. Specifically, a camera on the laser welding device is able to capture the positioning hole 110 and thus identifies a relative position of the positioning hole 110 and the positive electrode 101 of the first battery cell 10, so that a laser welding head of the laser welding device is able to weld and connect the first connecting portion 100 to the positive electrode 101 of the first battery cell 10 accurately, therefore improving the precision of the welding.

Further, in some embodiments, a part of the first connecting portion 100 located on a side thereof away from the second connecting portion 200 is protruding to define a protrusion 120. The protrusion 120 is welded with the positive electrode 101 of the first battery cell 10. The positioning hole 110 is set on the protrusion 120. The setting of the protrusion 120 can increase welding areas of the first connecting portion 100 and the positive electrode 101 of the first battery cell 10, thereby improving reliability and stability of the welding of the first connecting portion 100 and the positive electrode 101 of the first battery cell 10.

As shown in FIG. 1 and FIG. 2, in some embodiments, the first connecting portion 100 is further provided with a fixing hole 130. The fixing hole 130 is located on the central axis of the first connecting portion 100 and is connected to a plastic bracket (not shown). As the fixing hole 130 and the positioning hole 110 are both located on the central axis of the first connecting portion 100, it makes the formation of the busbar 1 standardized and normalized and improves the production efficiency.

As shown in FIG. 1 and FIG. 2, in some embodiments, a side surface of the second connecting portion 200 away from the first connecting portion is concave, defining an avoidance portion 210. The avoidance portion 210 is used to avoid the positive electrode 101 of the second battery cell 20 away from the first connecting portion 100, which is conducive to the welding connection between the second connecting portion 200 and the negative electrode 102 of the second battery cell 20, therefore improving the stability and reliability of the welding thereof to avoid defects of false welding and bursting point. Optionally, the avoidance portion 210 is arcuate so as to make the avoidance portion 210 adapted to the positive electrode 101 of the second battery cell 20.

As shown in FIG.1 and FIG. 2, in some embodiments, the busbar 1 further includes a curved portion 300. An end of the curved portion 300 is connected to the first connecting portion 100, and the other end of the curved portion 300 is connected to the second connecting portion 200. The arcuate protrusion 300 can provide a certain amount of deformation margin for the busbar 1 when welding, thereby reducing stress concentration between the first connecting portion 100 and the second connecting portion 200, and improving stability and reliability of the busbar 1.

As shown in FIG. 1 and FIG. 2, in some embodiments, the first connecting portion 100 or the second connecting portion 200 is provided with a first fusing portion 140. Each of two opposite sides of the first fusing portion 140 is provided with a first connecting section 150, respectively. The first connecting section is located between the first connecting portion 100 and the second connecting portion 200. In detail, an end of the first connecting section 150 is connected to the first connecting portion 100, and the other end of the first connecting section is connected to the second connecting portion 200.

In one embodiment, the first fusing portion 140 is connected in series to the first connecting portion 100. The first fusing portion 140 is set with a fuse. The first fusing portion 140 can utilize a metal conductor as its fuse. The fuse is connected in series in the first connecting portion 100. When an overload or a short circuit occurs in an entire circuit, which includes the busbar 1, a large current is generated and passes through the first fusing portion 140. It will melt the fuse via heat generation therein, thus forming a protection mechanism for breaking the circuit, and preventing the first battery cell 10 and the second battery cell 20 from catching fire or even exploding because of short-circuiting.

The setting of the first connecting sections 150 can strengthen connection strength between the first connecting portion 100 and the second connecting portion 200. In some embodiments, each first connecting section 150 has a thin cross-section, so that after the first fusing portion 140 is melted, the first connecting sections 150 on the opposite sides of the first fusing portion 140 can also be melted. During the test, when the entire circuit is overloaded or shortcircuited, a difference in melting time between the first fusing portion 140 and the first connecting section 150 is between 1 second (s) to 2s, thereby protecting the battery cells 10 and improving safety performance of the entire circuit.

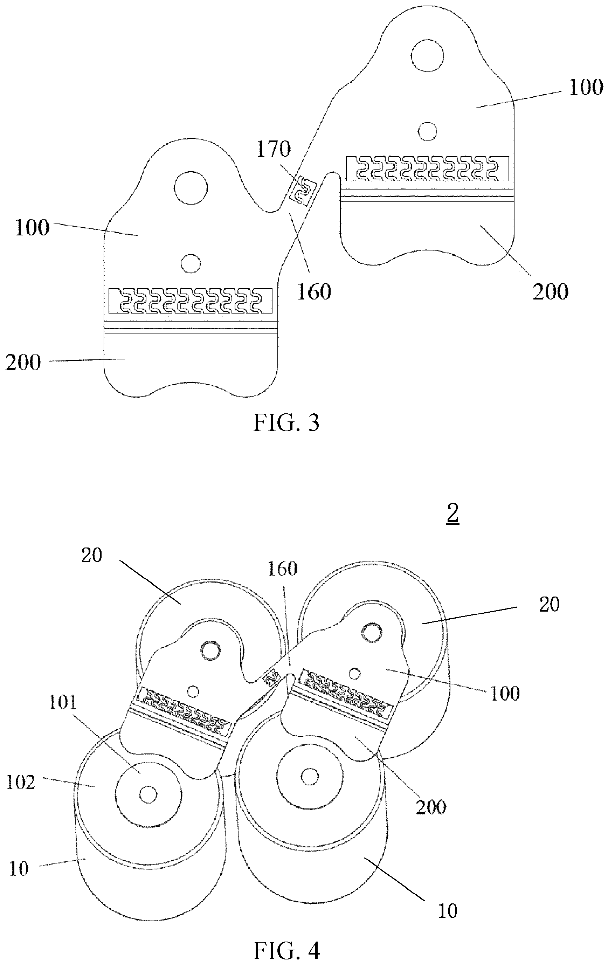

In addition, as shown in FIG. 3 and FIG. 4, the first connecting portion 100 can be further provided with at least one connecting arm 160. The connecting arm 160 can be provided with a second fusing portion 170. The connecting arm 160 is provided to facilitate series connection of adjacent busbars 1, thereby realizing parallel connection of the battery cells connected by the adjacent busbars 1. The provision of the second fuse portion 170 can effectively prevent thermal runaway effect of the battery cells triggered by an external short circuit.

As shown in FIG. 3 and FIG. 4, two aforementioned busbars 1 can be connected. Each busbar 1 is provided with one connecting arm 160, connecting the first connecting portion 100. The connecting arm 160 of one of the two busbars 1 is connected to the connecting arm 160 of the other of the two busbars 1. An extension direction of the connecting arm 160 of one of the two busbars 1 is different from that of the connecting arm 160 of the other of the two busbars 1. For example, the extension directions of the connecting arms 160 are reversed. The second fusing portion 170 can be provided on one of the connecting arms 160. In addition, the second fusing portion 170 can be located at the center of the two connecting arms 160, so as to prevent expansion force, relative displacement, or other factors generated by battery cells 10 during charge, discharge and vibration.

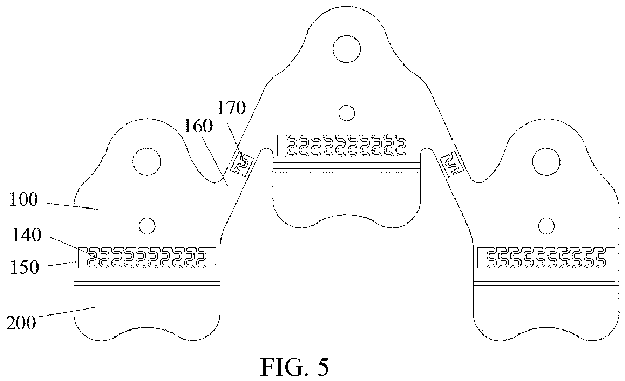

As shown in FIG. 5, three aforementioned busbars 1 can be connected sequentially. The three busbars 1 includes two end busbars 1 and a central busbar 1. The central busbar 1 is connected between the two end busbars 1. The two end busbars 1 can be symmetrical with respect to the central busbar 1. In detail, each end busbar 1 is provided with one connecting arm 160, which is connected to the first connecting portion 100 thereof. The central busbar 1 is provided with two connecting arms 160, which are symmetrical with respect to the coincided central axis of the central busbar 1. The connecting arm 160 of each end busbar 1 is connected to one of the two connecting arms 160 of the central busbar 1. The connecting arm 160 of each end busbar 1, or each connecting arm of the central busbar 1 is provided with one second fusing portion 170. The second fusing portion 170 can be located at the center of two connected connecting arms 160, so as to prevent expansion force, relative displacement, or other factors generated by battery cells 10 during charge, discharge and vibration.

It could be understood that the number of busbars 1 connected can also be set as four, five and so on, so as to realize parallel connection of battery cells 10 on different numbers of branches in the circuit, and improve energy density of battery module.

An embodiment of the present disclosure provides a battery module 2. The battery module 2 includes a plurality of battery cells and an aforementioned busbar 1. The busbar 1 connects the battery cells in series or in parallel. As the battery module 2 adopts the aforementioned busbar 1, production efficiency of the battery module 2 can be improved, thereby achieving the purpose of cost saving.

As shown in FIG. 2, in some embodiments, the battery module 2 includes a first battery cell 10, a second battery cell 20, and a busbar 1 connected between the first battery cell 10 and the second battery cell 20 in series.

As shown in FIG. 4, in some embodiments, the battery module 2 includes two busbars 1 and two battery cell groups, each battery cell group include a first battery cell 10 and a second battery cell 20. Each busbar 1 is provided with one connecting arm 160, connecting the first connecting portion 100, and the first connecting portion 100 is welded with the positive electrode 101 of the first battery cell 10 by laser, and the second connecting portion 200 is welded with the negative electrode 102 of the second battery cell 20 by laser, so that the first battery cell 10 and the second battery cell 20 in the same battery cell group are connected in series through one busbar. The connecting arm 160 of one of the two busbars 1 is connected to the connecting arm 160 of the other of the two busbars 1, so that the two battery cell groups are connected in parallel.

An embodiment of the present disclosure provides a battery pack (not shown), including the aforementioned battery module 2. As the production efficiency of the battery pack is high and the cost is low, the battery pack is conducive to mass production.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

## Claims

1. A busbar (1), **characterized by** comprising:
a first connecting portion (100), welded to a positive electrode or a negative electrode of a first battery cell (10);
a second connecting portion (200), connected to the first connecting portion (100) and welded to a negative electrode or a positive electrode of a second battery cell (20), wherein a central axis of the first connecting portion (100), a central axis of the second connecting portion (200), and a central axis of the first battery cell (10) and the second battery cell (20) are coincided with each other.

2. The busbar (1) of claim 1, **characterized in that** the first connecting portion (100) is provided with a positioning hole (110) located on the central axis of the first connecting portion (100).

3. The busbar (1) of claim 1, **characterized in that** the first connecting portion (100) is provided with a protrusion (120) out of a side of the first connecting portion (100) away from the second connecting portion (200), and the protrusion (120) having the positioning hole (110) thereon is welded to the positive electrode of the first battery cell (10).

4. The busbar (1) of claim 1, **characterized in that** the first connecting portion (100) is provided with a fixing hole (130) that is located on the central axis of the first connecting portion (100) and is configured to be connected to a plastic bracket.

5. The busbar (1) of claim 1, **characterized in that** a side of the second connecting portion (200) away from the first connecting portion (100) is recessed with an avoidance portion (210) that is configured to avoid the positive electrode of the second battery cell (20).

6. The busbar (1) of any one of claims 1 to 5, **characterized by** further comprising an curved portion (300) of which an end is connected to the first connecting portion (100), and an opposite end is connected to the second connecting portion (200).

7. The busbar (1) of any one of claims 1 to 5, **characterized in that** the first connecting portion (100) or the second connecting portion (200) is provided with a first fusing portion (140), and each of two opposite sides of the first fusing portion (140) is provided with a first connecting section (150) located between the first connecting portion (100) and the second connecting portion (200).

8. The busbar (1) of claim 7, **characterized in that** the first connecting portion (100) is provided with a connecting arm (160).

9. The busbar (1) of claim 8, **characterized in that** the connecting arm (160) is provided with a second fusing portion (170).

10. A battery module (2), **characterized by** comprising a plurality of battery cells and a busbar (1) of any one of claims 1 to 9, wherein each busbar (1) connects two battery cells in series or in parallel.

11. A battery pack, **characterized by** comprising a battery module (2) of claim 10.
